**Europäisches Patentamt**

**European Patent Office**

**Office européen des brevets**

(19)

(11) Numéro de publication : **0 341 114 B1**

(12) **FASCICULE DE BREVET EUROPEEN**

(45) Date de publication du fascicule du brevet :
**08.07.92 Bulletin 92/28**

(51) Int. Cl.$^5$ : **B23Q 16/00, B23Q 5/32**

(21) Numéro de dépôt : **89401088.3**

(22) Date de dépôt : **19.04.89**

(54) **Machine pour le perçage de matériaux durs tels que le verre.**

(30) Priorité : **22.04.88 FR 8805830**

(43) Date de publication de la demande :
**08.11.89 Bulletin 89/45**

(45) Mention de la délivrance du brevet :
**08.07.92 Bulletin 92/28**

(84) Etats contractants désignés :
**DE GB IT**

(56) Documents cités :
**DE-A- 2 014 313**
**DE-A- 2 119 317**
**DE-A- 2 158 886**
**DE-C- 840 040**
**FR-A- 2 050 687**

(56) Documents cités :
**FR-A- 2 212 202**
**GB-A- 890 635**
**GB-A- 1 299 002**
**US-A- 1 951 093**
**US-A- 2 391 398**
**US-A- 2 703 994**

(73) Titulaire : **ETABLISSEMENTS JANBAC**
**SOCIETE ANONYME**
**61, rue St Léger**
**F-78540 Vernouillet (FR)**

(72) Inventeur : **Bachmann, Christian**
**40, rue Jean Jaurès**
**F-78540 Vernouillet (FR)**

(74) Mandataire : **Boivin, Claude**
**9, rue Edouard-Charton**
**F-78000 Versailles (FR)**

EP 0 341 114 B1

EP 0 341 114 B1

## Description

La présente invention concerne une machine pour le perçage de matériaux durs tels que le verre, le marbre, le granit, les matières réfractaires ou les matières céramiques, à forets à concrétion diamantée, qui comporte des moyens pour déplacer axialement la broche du foret , une butée réglable pour limiter la course de la broche , des moyens pour déplacer cette butée et un dispositif d'initialisation et de régulation de la vitesse de travail (GB-A-1299002).

Dans une telle machine, la vitesse d'approche du foret doit être la plus rapide possible pour diminuer la durée d'un cycle de perçage, mais par contre sa vitesse d'avance pendant le travail doit être très lente, régulière, réglable et fidèle.

La force d'appui exercée par le foret doit être commodément réglable pour éviter la rupture des produits minces ou l'éclatement au moment de la débouchure.

La vitesse d'avance du foret doit être de plus compatible dans le temps avec son état d'usure. Une avance devenue relativement trop rapide conduit inéluctablement à la rupture du verre.

Ces différents réglages, notamment la position de passage de la vitesse d'approche à la vitesse de travail doivent être repris à chaque changement de foret (longueur variable) ou à chaque modification de l'épaisseur des matériaux à percer.

Dans l'industrie automobile, sur les lignes de façonnage à grande cadence des vitres, des opérations de perçage sont nécessaires.

Tout arrêt d'une ligne de fabrication pour le réglage d'une broche amène des arrêts en cascade préjudiciables à la cadence et à la qualité des produits.

Sur les perceuses à deux têtes automatiques le point de changement de la vitesse d'approche à la vitesse lente est donné par une came. Cette came est déplacée manuellement par l'opérateur.

Des systèmes à partir de butées mobiles d'entraînement d'avance de la broche par motoréducteur et embrayage ont été jadis proposés. Ils n'ont jamais eu d'existence industrielle, car les vitesses ultralentes et régulières nécessaires sont impossibles à obtenir par glissement d'un embrayage; de plus, les forces d'appui exercées sont pratiquement incontrôlables.

Sur les machines outils, des systèmes d'avance variable à course réglable sont communément réalisés à partir de commandes numériques assurant directement l'avance de l'outil. Mais ces systèmes présentent de graves inconvénients dans le cas de perceuses à foret à concrétion diamantée. En effet l'écart possible entre les vitesses rapide et lente est limité, ce qui oblige à réduire la vitesse d'approche. Le coût de ces systèmes est prohibitif dans le cas d'une perceuse à trous multiples; ainsi une perceuse à double tête devant percer huit trous comporte seize broches ce qui nécessite d'utiliser quatre commandes numériques à quatre axes. Dans le cas d'un manque de mordant du foret, celui-ci continue d'avancer, ce qui entraîne une rupture du matériau en cours de perçage.

La présente invention a pour objet une perceuse qui remédie à ces inconvénients.

La machine pour le perçage de matériaux durs tels que le verre, le marbre ou le granit, les matières réfractaires ou les matières céramiques, à forets à concrétion diamantée selon l'invention comporte des moyens pour déplacer axialement la broche du foret, une butée réglable pour limiter la course de la broche , des moyens pour déplacer cette butée et un dispositif d'initialisation et de régulation de la vitesse de travail, caractérisée en ce que les moyens pour déplacer axialement la broche du foret sont constitués par un vérin pneumatique à double effet et en ce que ledit dispositif comprend un interrupteur actionné par le mouvement relatif de la butée et de la broche dû à la rencontre du foret avec la matière à percer et un codeur lié à l'avance de la butée jour programmer les courses et vitesses d'avance rapide et de travail du foret à l'aide de compteurs-décompteurs. L'écart entre les vitesses des deux mouvements peut être aussi important que cela est nécessaire. L'effort de poussée sur le foret est constant et commodément réglable; le mouvement d'avance du foret est de plus auto-régulé car, en cas de manque de mordant du foret, la butée avance plus vite que la broche, ce qui actionne l'interrupteur et signale ainsi l'usure du foret. On peut prévoir un codeur rotatif ou linéaire lié à l'avance de la butée pour programmer, après initialisation, les différentes courses à l'aide de compteurs-décompteurs.

La perceuse selon l'invention est de préférence à double-tête.

On a décrit ci-après, à titre d'exemple non limitatif, un mode de réalisation d'une perceuse à double tête selon l'invention, avec référence au dessin annexé dans lequel :

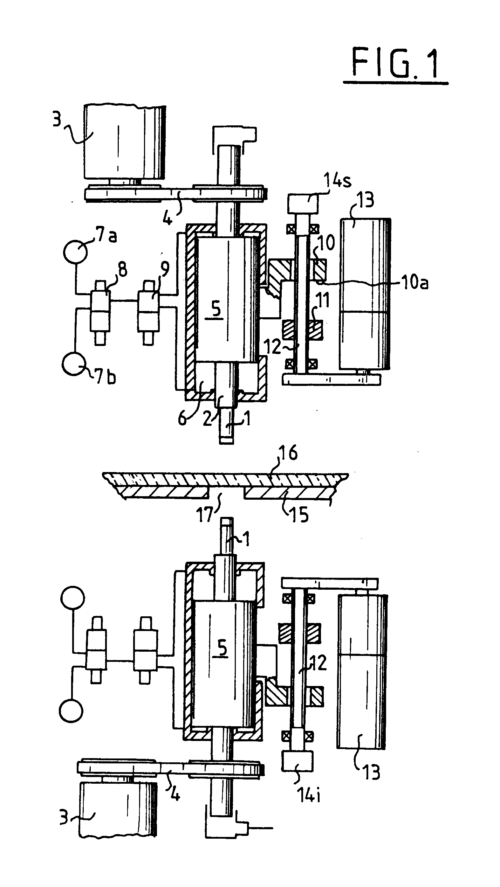

La Figure 1 est un schéma de cette perceuse;

La Figure 2 est le schéma électrique de la perceuse;

La Figure 3 montre les diverses positions des broches et des forets.

Telle qu'elle est représentée au dessin, la perceuse selon l'invention est à double tête. Chaque tête comprend un foret 1 à concrétion diamantée fixé à l'extrémité d'une broche 2 qui peut être entraînée en rotation

2

par un moteur 3 par l'intermédiaire d'une courroie 4.

La broche 2 est montée à rotation dans un corps 5 qui constitue le piston d'un vérin 6 à double effet. Celui-ci peut être alimenté soit à partir d'une source 7a d'air à haute pression utilisée pendant le travail, soit à partir d'une source 7b d'air à basse pression utilisée seulement pendant l'opération d'initialisation par l'intermédiaire de deux distributeurs 8 et 9. Le corps 5 est solidaire d'un doigt 10 muni d'un capteur électrique 10a. Sur le trajet de ce doigt se trouve une butée constituée d'une noix 11 qui est empêchée de tourner et montée sur une vis 12 parallèle à la direction de déplacement du corps 5. Cette vis 12 peut être entraînée en rotation par un moto-réducteur 13 à vitesse variable et actionne un codeur 14s ou 14i.

Les deux têtes sont disposées de part et d'autre d'une table 15 sur laquelle peut être placée une feuille de verre 16 et qui comporte un trou 17 dans l'axe des forets 1.

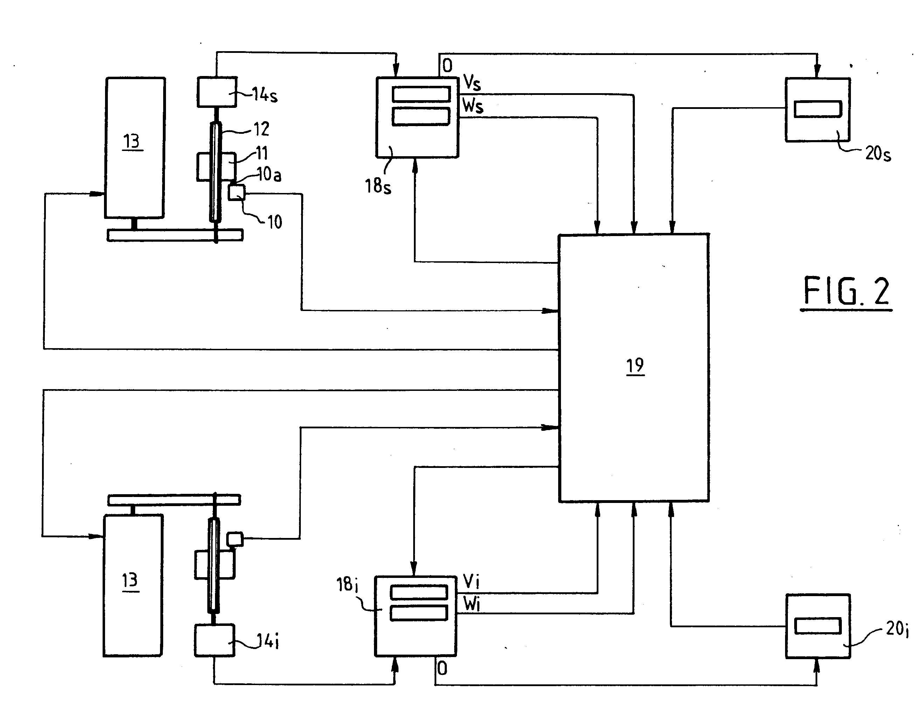

Chacun des codeurs 14s et 14i commande un compteur à deux présélections 18s ou 18i (Figure 2) qui fournit trois signaux, un signal positif Ws ou Wi, un signal négatif Vs ou Vi et un signal de passage à zéro. Ces compteurs sont situés dans l'armoire de commande 19 et ne sont pas accessibles à l'opérateur. Les signaux de passage à zéro sont envoyés à un compteur à molette 20s ou 20i accessible à l'opérateur.

La machine qui vient d'être décrite fonctionne de la manière suivante :

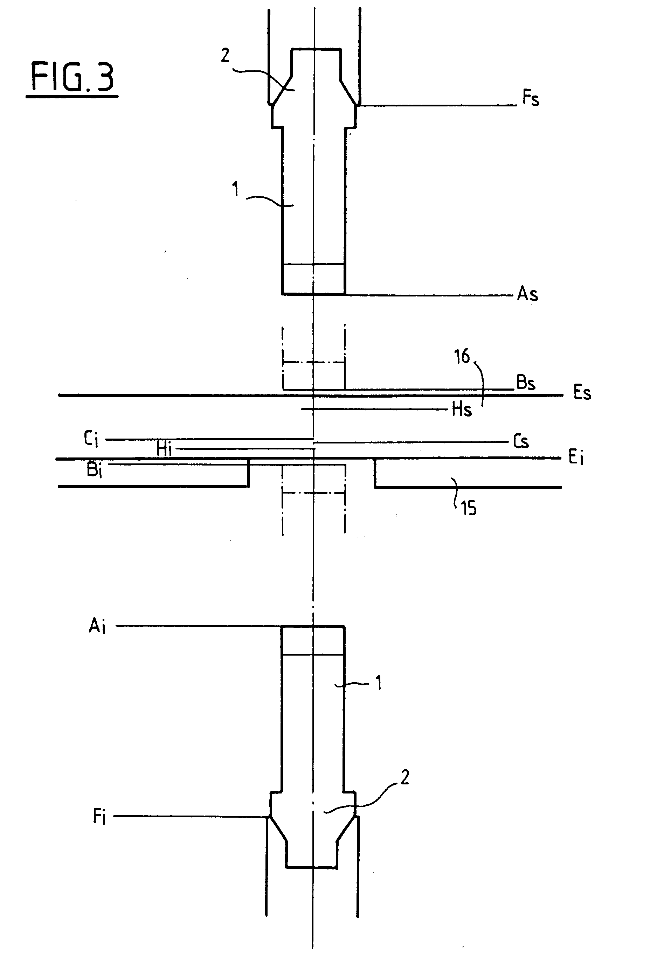

A) Définition des différentes positions (voir Figure 3)

Soit Fs :     La position du nez de broche 2 supérieure rentrée.
            Elle est constante.
Soit Fi :     La position correspondante de la broche 2 inférieure.
Soit As :     La position correspondante de l'extrémité du foret 1 supérieur.
            Elle est variable avec les différents forets et en fonction de l'usure d'un même foret.
Soit Ai :     La position correspondante de l'extrémité du foret 1 inférieur.
            Elle est variable (comme As).
Soit Es :     La position correspondant à la face supérieure du produit.
            Elle est variable avec cette épaisseur.
Soit Ei :     La position correspondant à la face inférieure du produit.
            Elle est constante, elle correspond au niveau de la table d'appui.
Soit Bs :     Le point ou le foret 1 supérieur doit passer de la vitesse rapide d'approche à la vitesse lente de travail.
            Il est situé à une distance fixe de Es de 2 à 3/10 ème de mm par exemple.
            La distance Bs-Es permet de compenser les tolérances de fabrication sur l'épaisseur du verre et évite au foret de heurter le produit en grande vitesse d'approche.
Soit Bi :     Le point correspondant pour le foret 1 inférieur.
Soit Cs :     La position de l'extrémité du foret 1 supérieur à la fin du perçage.
Soit Ci :     La position de l'extrémité du foret 1 inférieur à la fin du perçage.
            Ces deux points dépendent de l'épaisseur du verre.
            Ils sont tels que Cs + $\varepsilon$ = 2 Ci, $\varepsilon$ est équivalent au recouvrement.
Soit Hs :     Un point situé à une distance donnée de Es de l'ordre de 0,8 à 1mm pour du verre de 3,2mm.
Soit Hi :     Un point situé à une distance de Ei telle que la distance Es Hs supérieure d'environ 2/10mm à la distance Ei Hi.
            Les points Hs et Hi serviront de référence pour éviter la rencontre des deux forets.

Les présélections Vs et Vi des compteurs 18s et 18i permettent de définir les courses Es-Bs et Ei-Bi. Le compteur 20s permet d'afficher la course Es-Cs de la tête supérieure correspondant aux deux tiers de l'épaisseur à percer plus le recouvrement $\varepsilon$ nécessaire au débouchage et à la bonne finition du trou. Le compteur 20i permet d'afficher la course Ei-Ci de la tête inférieure correspondant au tiers de l'épaisseur à percer. Les présélections Ws et Wi des compteurs 18s et 18i permettent de définir les courses Es-Hs et Ei-Hi.

B) INITIALISATION -

Pour simplifier, nous ne donnerons ci-après que la marche de la tête supérieure.
La marche de la tête inférieure est identique.

– La tête supérieure est en position haute grâce à son vérin pneumatique 6.
– On amène la noix 11 grâce au moto-réducteur 13 en position haute, au contact du doigt 10. Le capteur électrique 10a est contacté
– On descend la tête supérieure en mettant l'air comprimé du circuit à faible pression 7b sur le vérin 6.
– On fait descendre simultanément la noix 11 en petite vitesse grâce au moto-réducteur 13. Le doigt reste

<div align="center">3</div>

en appui sur la noix.

Le capteur électrique 10a reste contacté.

– Quand le foret arrive sur la surface du produit, la faible pression qui s'exerce due à l'air et la petite vitesse d'attaque évitent sa rupture, la noix continue son mouvement de descente actionné par le moto-réducteur 13. Le capteur 10a n'est plus contacté.

Il initialise alors le zéro du compteur-décompteur 18s.

– La vanne 9 inverse les arrivées d'air sur le vérin.

– Le vérin 6 remonte la tête.

– Le moto-réducteur 13 remonte la noix.

– Le compteur 18s décompte jusqu'à la numérotation correspondant à Vs.

– Le moto-réducteur 13 s'arrête, la noix 11 est alors en attente dans la position correspondant à la position Bs du foret 1.

MARCHE NORMALE

Le début du cycle met le vérin en descente rapide par le circuit en haute pression 7a.

Le moto-réducteur 13 entraîne la noix 11 en vitesse lente de travail, régulière et aussi faible que nécessaire, le compteur 18s commence à décompter la valeur Vs.

Le vérin amène le doigt 10 sur la noix 11 et commence sa descente en vitesse de travail. La force s'exerçant sur le foret est parfaitement définie par la pression du vérin.

Arrivé au zéro du compteur 18s celui-ci déclenche le compteur 20s. Ce compteur compte et arrive à la valeur correspondant à la position programmée de fin de perçage, il donne le signal de remontée du vérin 6.

La butée 11 actionnée par le moto-réducteur 13 reprend la position correspondant à Vs de début de cycle.

Si, au cours d'une opération de descente, le foret 1 donne un effort résistant, dû à son usure, qui ne permet pas d'obtenir la vitesse de travail programmée, le doigt 10 va descendre moins vite que la noix 11.

Le capteur électrique 10a va s'ouvrir donnant le signal de changement de foret, nécessité par son usure.

Le foret 1 supérieur perce les deux tiers de l'épaisseur de la plaque 16 plus le recouvrement.

Le foret 1 inférieur fait un tiers de l'épaisseur.

Ils travaillent tous les deux à des vitesses d'avance du même ordre.

La distance Es - Hs est supérieure de 2/10 ième de millimètre à la distance Ei - Hi.

Si le foret inférieur passe en Hi voisin de Ci (signal donné par Wi) avant que le foret supérieure ne passe en Hs (signal donné par Ws), les risques de rencontre sont nuls la course Hi - Ci restant à faire du foret inférieur étant, avant son mouvement de recul, beaucoup plus petite que la course Hs - Ci pouvant amener la rencontre.

**Revendications**

1. Machine pour le perçage de matériaux durs tels que le verre, le marbre ou le granit, les matières réfractaires ou les matières céramiques, à forets à concrétion diamantée, qui comporte des moyens pour déplacer axialement la broche (2) du foret (1), une butée réglable (11) pour limiter la course de la broche (2), des moyens pour déplacer cette butée et un dispositif d'initialisation et de régulation de la vitesse de travail, caractérisée en ce que les moyens pour déplacer axialement la broche (2) du foret (1) sont constitués par un vérin pneumatique (6) à double effet et en ce que ledit dispositif comprend un interrupteur (10a) actionné par le mouvement relatif de la butée (11) et de la broche (2) dû à la rencontre du foret (1) avec la matière à percer et un codeur (14s ou 14i) lié à l'avance de la butée (11) pour programmer les courses et vitesses d'avance rapide et de travail du foret (1) à l'aide de compteurs-décompteurs (18s et 18i).

2. Machine selon la revendication 1, caractérisée par des moyens pour signaler que la vitesse d'avance du foret (1) est inférieure à celle de la butée (11).

3. Machine selon l'une des revendications 1 ou 2, caractérisée par des moyens pour éviter la rencontre des deux forets.

**Patentansprüche**

1. Maschine zum Bohren von harten Materialien wie Glas, Marmor oder Granit sowie feuerfesten oder keramischen Materialien mit diamantbesetzten Bohrern, welche Mittel zur axialen Verschiebung der Spindel (2) des Bohrers (1) aufweist, sowie einen einstellbaren Anschlag (11) zur Begrenzung des Weges der Spindel (3), Mittel zur Verschiebung dieses Anschlags und eine Vorrichtung zur Initialisierung und regelung der Arbeitsgeschwin digkeit, dadurch gekennzeichnet, daß die Mittel  zur axialen Verschiebung der Spindel (2) des Bohrers (1) durch einen doppelt wirkenden  Pneumatikzylinder (6) gebildet werden und daß  die besagte Vorrichtung einen Schalter (10a) aufweist, der durch die relative Bewegung  zwischen dem Anschlag (11) und der Spindel (2)  betätigt wird, welche durch das Zusammentreffen  des Bohrers (1) mit dem zu bohrenden Material bedingt ist, sowie einen Codierer (14s oder 14i),  der mit dem Vorschub des Anschlags (11) gekoppelt  ist zum Programmieren der Wege und der Geschwin digkeiten des Schnellvorschubs und des Arbeits vorschubs des Bohrers (1) mit Hilfe von Vor wärts-rückwärts-Zählern (18s und 18i).

2. Maschine nach Anspruch 1 gekennzeichnet durch  Mittel zur Abgabe eines Signals, wenn die Vor schubgeschwindigkeit des Bohrers (1) unterhalb  derjenigen des Anschlags (11) liegt.

3. Maschine nach einem der Ansprüche 1 oder 2  gekennzeichnet durch Mittel, um das Aufeinan der treffen zweier Bohrer zu vermeiden.

## Claims

1. Machine for boring into hard materials, such as glass, marble or granite, refractory or ceramic materials, with diamond impregnation drill bits, said machine comprising means to axially move the spindle (2) of the drill bit (1), an adjustable stop (11) so as to limit the travel of the spindle (2), means to move this stop and a device for initializing and adjusting the operating speed, wherein the means to axially move the spindle (2) of the drill bit (1) are constituted by a double action pneumatic jack (6) and wherein said device includes a switch (10a) activated by the relative movement of the stop (11) and of the spindle (2) due to the drill bit (1) encountering the material to be bored into, and a coder (14s or 14i) linked to the forxard movement of the stop (11) so as to programme the travels and fast advance and working speeds of the drill bit (1) with the aid of reversible counters (18s and 18i).

2. Machine according to claim 1, characterized by means for signalling that the advance speed of the drill bit (1) is slower than that of the stop (11).

3. Machine according to claim 1 or 2, characterized by means to prevent the two drill bits from meeting each other.

# FIG.1

FIG. 2

EP 0 341 114 B1

FIG.3

2

1

Fs

As

16

Bs      Es

Hs

Ci          Hi                    Cs      Ei

Bi                                        15

Ai

1

2

Fi